(19) **Europäisches Patentamt / European Patent Office / Office européen des brevets**

(11) **EP 3 537 320 A1**

(12) **EUROPEAN PATENT APPLICATION**

(43) Date of publication:
**11.09.2019 Bulletin 2019/37**

(21) Application number: **18161118.7**

(22) Date of filing: **09.03.2018**

(51) Int Cl.:
*G06F 21/30* (2013.01)   *H04L 9/32* (2006.01)
*H04L 29/06* (2006.01)   *H04W 12/06* (2009.01)
*G10L 17/00* (2013.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **VoicePIN.com Sp. z o.o.**
**30-535 Kraków (PL)**

(72) Inventors:
• **KALICKI, Daniel**
  **30-535 Kraków (PL)**
• **DANKIEWICZ, Michal**
  **30-535 Kraków (PL)**
• **CIURKA, Pawel**
  **30-535 Kraków (PL)**
• **GALKA, Jakub**
  **30-535 Kraków (PL)**

(74) Representative: **Markieta, Jaroslaw Franciszek**
**Kancelaria Rzeczników Patentowych**
**J. Markieta, M. Zielinska-Lazarowicz Sp. p.**
**Bukowinska 2 lok 160**
**02-703 Warszawa (PL)**

(54) **A METHOD OF VOICE-LEXICAL VERIFICATION OF AN UTTERANCE**

(57)     The subject of the invention is a method for voice-lexical verification of an utterance, in which the user's voice signal containing the password (H) is recorded and then a temporal-statistical voice model (VP) is retrieved from a database with information about the segmentation of the voice model. The method is characterised in that from the recorded voice signal (H) a fragment containing password (h) is extracted (10), on the basis of password (h) a sequence of voice-lexical feature vectors (sw) is established. In the next stage, voice-lexical verification is conducted by assigning voice-lexical feature vectors (sw) to segments of the temporal-statistical voice model (VP) and then the degree of voice correlation (vc) between the voice-lexical feature vectors (sw) of the registered password (h) assigned to segments of the voice model (VP) and segments in the voice model (VP) calculated. Based on the results of the comparison, a verification signal for the utterance is generated, when the degree of correlation (vc) is greater than the specified correlation threshold. The subject of the invention is also the method of registration of the voice model (VP).

Fig. 1

EP 3 537 320 A1

**Description**

The subject of the invention is a method of voice-lexical verification of an utterance, which is applicable in security and biometric verification systems.

Verification of lexical correctness is an important aspect of the verification system from the perspective of security. A hypothetical attack attempt could consist in providing a recording of the targeted person for biometric verification. In a system not equipped with lexical verification, this could be a recording of any content. Obtaining such a recording is much easier for a potential attacker than obtaining a recording of the attack's target uttering a specific biometric password.

Techniques for describing user voice verification methods are known in the prior art. Document US20140359739A1 discloses a method of user voice verification based on the comparison of a segmented recorded voice signal comprising a password and an answer to a dynamic question, with the corresponding segments of a voice pattern stored in a database.

Publication US4751737A discloses a method of user voice verification based on creating time frames of a registered voice signal containing a password and comparing them with time frames of a voice pattern stored in a database. An analogous solution is disclosed in document US5710866A, in which the probability of correlation of segments of a registered voice signal containing a password is calculated for divided segments of a voice pattern stored in a database.

The essence of the invention is a method of voice-lexical verification of an utterance in which the user's voice signal containing the password is recorded and then a temporal-statistical voice model containing information on segmentation of the voice model is downloaded from a database, characterised in that the fragment containing the password is extracted from the recorded voice signal, and then the extracted password is divided into voice-lexical feature vectors assigned to the temporal-statistical segments of the voice model. In the next stage, voice-lexical verification is performed by calculating the degree of voice correlation between the voice-lexical feature vectors of the registered password assigned to segments of the voice model and the segments of the voice model, and then a voice-lexical verification signal for the utterance is generated when the degree of voice correlation is greater than the specified correlation threshold.

Preferably, the method according to the invention is characterised in that single vectors of voice-lexical features corresponding to a length of 15-30 ms are isolated in the step of determining the voice-lexical correlation.

Preferably, the method according to the invention is characterised in that the voice-lexical feature vectors contain features assigned based on the processed sound signal representing a voice fragment of the spoken utterance, taking into account the sequence of individual parts of the utterance for a given period of time.

Preferably, the method according to the invention is characterised in that the temporal-statistical voice model read out from the database is updated based on the sequence of voice-lexical feature vectors acquired for the registered password, if the degree of voice-lexical correlation is greater than the specified correlation threshold.

Preferably, the method according to the invention is characterised in that voice-lexical verification of the utterance is performed using normalisation consisting in determining the similarity of voice feature vectors assigned to a particular voice segment of the voice model segment to the corresponding segment of the voice model, based on the similarity of the voice feature vectors assigned to a particular segment of the voice model in relation to other segments of the voice model, based on the following equation:

$$d_S = \frac{D(X_S, \lambda_S) - \mu_S}{\sigma_S} \ (2)$$

The essence of the invention also consists in the method of registration of a voice model, in which a series of utterances containing a set password is recorded, characterised in that a series of sequences containing the password is extracted from the recorded voice signal and a sequence of voice-lexical feature vectors is determined, then a temporal-statistical voice model is created based on the sequence of voice-lexical feature vectors, then the temporal-statistical model is divided into segments differing from each other by a certain value of similarity, after which the temporal-statistical voice model is saved, keeping information on the segmentation in the database.

Preferably, the method according to the invention is characterised in that the segmentation of the temporal-statistical model is performed by means of changing the boundaries of the segment, so as to minimise the similarity between subsequent segments.

An advantage of the invention is the use of the temporal-statistical voice model, inclusive of the order of occurrence of individual parts of the password phrase. Thanks to this feature, such a model can be used, apart from identity verification, to verify lexical correctness, i.e. the correctness of the given password. Lexical verification is an important aspect of the verification system from the perspective of security, as it significantly reduces the risk of successful verification by an unauthorised person.

The subject of the invention is presented in more detail in a preferred embodiment in a figure, in which:

Fig. 1    presents a diagram of the voice verification system

Fig. 2    presents a diagram of the method of voice-lexical verification of the utterance

Fig. 3    presents a diagram of the voice model registration method

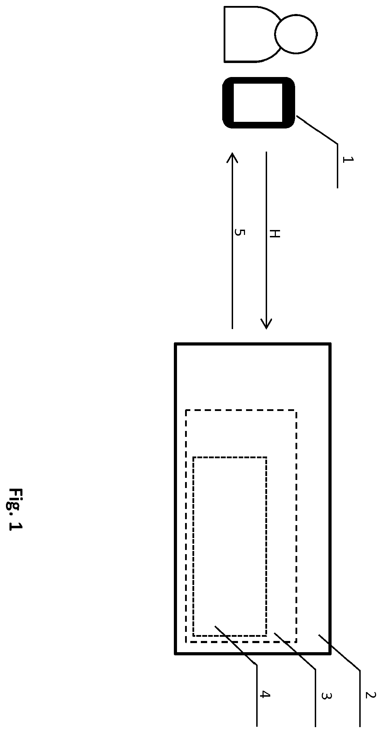

Fig. 1 presents a diagram of the voice verification system, consisting of device 1, on which the client application "Client" is installed and server 2 connected to database 3, which is tasked with verification of the user's voice. The "Client" mediates between the user and the voice verification server by recording and transmitting a voice signal containing password H. On the basis of the transmitted voice signal, a comparison is made with voice model 4 stored in database 3 of server 2, while "Client" 1 receives information about a positive or negative result of the user's verification 5. For security reasons, the "Client" or user has no knowledge of the type of verification performed. Only two verification results are possible from the user's perspective: positive or negative, but the reason for negative verification is unknown.

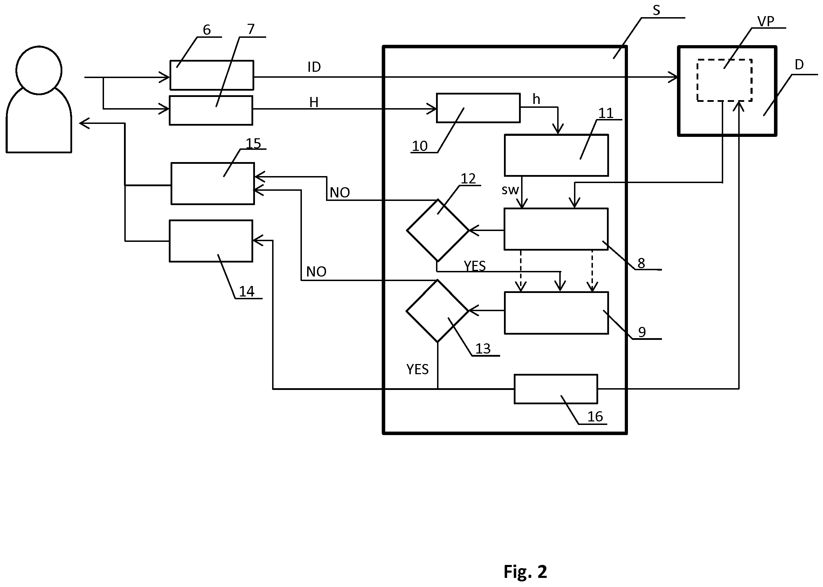

Fig. 2 presents a diagram of the method of voice-lexical verification of the utterance. The process of voice-lexical verification of the utterance begins with identification 6 of the user, where identification 6 of the user may be performed by providing an ID, e.g. a login. The ID data is transferred to server S and based on it database D is queried for the statistical-temporal voice model VP of the identified user. In the next stage 7, the user's voice signal is recorded containing password H and the user's voice signal containing password H is transmitted to the server e.g. in the form of a file. Server S is responsible for performing user verification from the perspective of voice-lexical correlation 8, 9 of the recorded voice signal containing password H against the temporal-statistical model of the voice model VP stored in the database. Then, from the recorded voice signal containing password H, a fragment 10 containing the password h is extracted. The isolated password h is subject to division 11 into voice-lexical feature vectors 15-30 ms long, with voice-lexical feature vectors assigned to segments of the temporal-statistical voice model VP.

In the process of voice-lexical verification 8, 9 the degree of correlation with the temporal-statistical voice model VP is computed 12, 13 by comparing the model generated from the voice-lexical feature vectors of the registered password h, as assigned to the added segment of the voice model with segments in the voice model VP.

Biometric verification 8 is performed first, i.e. a procedure using the sequence of voice-lexical feature vectors sw and the temporal-statistical voice model of the user. This procedure results in a response from module 12 examining biometric correlation in numerical form, which is a measure of biometric correlation. The higher the value of this measure, the higher is the certainty that the declared user's identity (using, for example, the login) is in line with the identity of the test voice sample's author. This value is compared against the biometric threshold. If the measure of biometric correlation is greater than this threshold, the identity is considered confirmed and lexical verification 9 can commence.

The same user voice model VP is used in the lexical verification procedure 9. It consists in assigning a segment index to each voice feature vector. The segment index of a given voice feature vector may be greater than or equal to the index value of the previous voice feature vector. The first voice feature vector is assigned an index equal to 1. The sequence of segment indices together with the temporal voice model enables lexical verification 9 to be performed by comparing the similarity of segment vectors against the model of a particular segment with the similarity of the same vectors against the models of other segments. This comparison is performed for each segment. Finally, the results from all segments are averaged. This averaged result is a measure of lexical similarity that is compared 13 with the lexical threshold. If the result is higher than the assumed lexical threshold, the sample is considered lexically correct and the client layer is informed about the positive verification result 14, while in the opposite case the verification result is negative 15.

As mentioned above, the temporal model may be a statistical model in nature. The statistical model can be described as a probability density function. The domain of this function in the case of the described solution is a space the size of a single voice feature vector. The statistical model determines the probability that a single feature vector comes from the probability distribution of this statistical model. Therefore, it is possible to determine function D (1) as a function of the voice-lexical feature vector sequence sw and the statistical model, where X is a sequence of voice feature vectors, $\lambda$ is the statistical model, xt is a single element of voice feature vector sequences, S is the number of voice feature vectors in the sequence

$$D(X, \lambda) = \frac{\sum_{x_t \in X} LL(x_t | \lambda)}{S} \tag{1}$$

Then, for each segment s $\in$ {1 .. N}, where N is the number of segments, Xs is the vector sequence assigned to segment s, one can determine the measure (2), which can be interpreted as the degree of similarity of feature vectors to the own segment against the similarity of these vectors to other segments. The final measure of similarity is the arithmetic mean of ds., s ∈ {1,.. N}.

$$\mu_S = \frac{\sum_{i \in \{1,...N\} \setminus \{s\}} D(X_S, \lambda_i)}{N-1} \qquad (2.1)$$

$$\sigma_S = \frac{\sum_{i \in \{1,...N\}, \setminus \{s\}} (D(X_S, \lambda_i) - \frac{\sum_{i \in \{1,...N\}, \setminus \{s\}} D(X_S, \lambda_i)}{N-1})^2}{N-1} \qquad (2.2)$$

$$d_S = \frac{D(X_S, \lambda_S) - \mu_S}{\sigma_S} \qquad (2)$$

To increase the effectiveness of the voice-lexical verification 8, 9 of the registered password, an adaptive model 16 was used that allows updating the temporal-statistical voice model VP read from database D by including a history of the comparison results 13 of voice correlation vc against the defined correlation threshold.

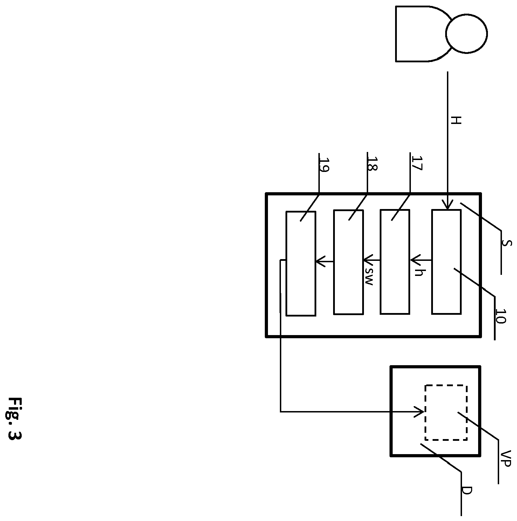

Fig. 3 presents a diagram of the voice model registration method. The procedure starts with the stage of recording the voice signal, in which the user is asked to utter the fixed password H several times, which is sent to server S, e.g. in the form of a file. From the recorded voice signal a series of sequences containing the password h is extracted 10 and then the extraction 17 of voice-lexical feature vectors is performed, where each voice-lexical feature vector describes an audio signal 15-30 ms long, yielding a sequence of voice-lexical feature vectors sw. Techniques for isolation of voice feature vectors include, for example, MFCC Mel-frequency cepstrum or PLP Perceptual Linear Prediction. The obtained sequence of voice-lexical feature vectors is transferred to building module 18, in which the temporal-statistical voice model VP is created using HMM (Hidden Markov model). In the next stage 19, the created temporal-statistical voice model VP is segmented into segments differing from each other by a certain value of similarity, preferably by changing the segment boundaries, so as to minimise the similarity value between successive segments.

The last stage of the registration process is to store the temporal-statistical voice model VP while retaining information about segmentation in database D, to which the query key is the user ID, e.g. login.

**Claims**

1.  A method of voice-lexical verification of an utterance, in which:
    the user's voice signal containing password (H) is recorded,
    **characterised in that:**

      a temporal-statistical voice model (VP) containing information on segmentation of the voice model is downloaded from the database,
      a fragment containing password (h) is extracted (10) from the recorded voice signal (h), on the basis of password (h) a sequence of voice-lexical feature vectors (sw) is established biometric verification (8) of the utterance is performed by:

        assigning voice-lexical feature vectors (sw) to the temporal-statistical voice model (VP) segments
        calculating the degree of biometric correlation between the voice-lexical feature vectors (sw) of the registered password (h) assigned to segments of the voice model (VP) and the segments in the voice model (VP),

      a biometric verification (8) signal (15) is generated when the degree of correlation is greater than the specified correlation threshold and then
      lexical verification (9) of the utterance is performed by:

        assigning voice-lexical feature vectors (sw) to the temporal-statistical voice model (VP) segments
        calculating the degree of voice correlation between the voice-lexical feature vectors (sw) of the registered password (h) assigned to segments of the voice model (VP) and the segments in the voice model (VP),

      an utterance verification signal (14) is generated when the degree of lexical correlation (vc) is greater than the specified correlation threshold.

2. The method according to claim 1 **characterised in that** in the step of determining the biometric and lexical correlation (vc), individual voice-lexical feature vectors (sw) are extracted (10) with a length of 15-30 ms.

3. The method according to claim 1 **characterised in that** the voice-lexical feature vectors (sw) contain features assigned based on the processed sound signal representing a voice fragment of the spoken utterance, taking into account the sequence of individual parts of the phrase for a given period of time.

4. The method according to claims 1 and 2 **characterised in that** the temporal-statistical voice model (VP) read out from the database (D) is updated based on the sequence of voice-lexical feature vectors (sw) acquired for the registered password (h), if the degree of voice-lexical correlation (vc) is greater than the specified correlation threshold.

5. The method according to any one of claims 1 to 3 **characterised in that** the lexical verification of the utterance is performed using normalisation consisting in
determining the similarity of voice feature vectors (sw) assigned to a particular voice model (VP) segment to the corresponding segment of the voice model (VP) based on the similarity of the voice feature vectors (sw) assigned to a particular segment of the voice model (VP) in relation to other segments of the voice model (VP), based on the following equation:

$$d_s = \frac{D(X_s, \lambda_s) - \mu_s}{\sigma_s}$$

6. A method of registration of the voice model (VP) in which ,

a series of utterances containing a set password (H) is recorded,
**characterised in that**
from the recorded voice signal (H) a series of sequences containing the password (h) is extracted (10), a series of sequences of voice-lexical feature vectors is determined (sw)
a temporal-statistical voice model (VP) is created on the basis of a sequence of voice-lexical feature vectors (sw), segmentation of the temporal-statistical model (VP) into segments differing from each other by a certain value of the similarity measure is performed, after which
a temporal-statistical voice model is saved, with information on the segmentation kept in database (D).

7. The method according to claim 6 **characterised in that** the segmentation of the temporal-statistical model is performed by means of changing the boundaries of the segment, so as to minimise the similarity between subsequent segments.

Fig. 1

**Fig. 2**

**Fig. 3**

Europäisches
Patentamt

European
Patent Office

Office européen
des brevets

# EUROPEAN SEARCH REPORT

**Application Number**

EP 18 16 1118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/225374 A1 (RODRIGUEZ LUIS BUERA [ES]) 4 August 2016 (2016-08-04)<br>* figures 1-4 *<br>* paragraphs [0002] - [0146] *<br>* paragraphs [0155] - [0190] *<br>* claims 1-30 *<br>----- | 1-7 | INV.<br>G06F21/30<br>H04L9/32<br>H04L29/06<br>H04W12/06<br>G10L17/00 |
| X | US 2013/325473 A1 (LARCHER ANTHONY [SG] ET AL) 5 December 2013 (2013-12-05)<br>* figures 1-8 *<br>* paragraphs [0002] - [0008] *<br>* paragraphs [0020] - [0058] *<br>* pages 1-9 *<br>----- | 1-7 | |
| A | US 2008/312926 A1 (VAIR CLAUDIO [IT] ET AL) 18 December 2008 (2008-12-18)<br>* figures 1-7 *<br>* paragraphs [0001] - [0022] *<br>* paragraphs [0033] - [0061] *<br>* claims 27-34 *<br>----- | 1-7 | |
| A | US 2010/131273 A1 (ALEY-RAZ ALMOG [IL] ET AL) 27 May 2010 (2010-05-27)<br>* figures 1-4 *<br>* paragraphs [0002] - [0027] *<br>* paragraphs [0041] - [0084] *<br>* claims 1-9 *<br>----- | 1-7 | TECHNICAL FIELDS SEARCHED (IPC)<br><br>G06F<br>H04L<br>H04W<br>G10L |

The present search report has been drawn up for all claims

| Place of search | Date of completion of the search | Examiner |
|---|---|---|
| Munich | 31 May 2018 | Erdene-Ochir, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 16 1118

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2018

| Patent document cited in search report | | | Publication date | Patent family member(s) | | | Publication date |
|---|---|---|---|---|---|---|---|
| US 2016225374 | A1 | | 04-08-2016 | DK | 2713367 | T3 | 20-02-2017 |
| | | | | EP | 2713367 | A1 | 02-04-2014 |
| | | | | EP | 2901445 | A1 | 05-08-2015 |
| | | | | ES | 2605779 | T3 | 16-03-2017 |
| | | | | US | 2016225374 | A1 | 04-08-2016 |
| | | | | WO | 2014048855 | A1 | 03-04-2014 |
| US 2013325473 | A1 | | 05-12-2013 | CN | 103456304 | A | 18-12-2013 |
| | | | | US | 2013325473 | A1 | 05-12-2013 |
| US 2008312926 | A1 | | 18-12-2008 | CA | 2609247 | A1 | 30-11-2006 |
| | | | | EP | 1889255 | A1 | 20-02-2008 |
| | | | | US | 2008312926 | A1 | 18-12-2008 |
| | | | | WO | 2006126216 | A1 | 30-11-2006 |
| US 2010131273 | A1 | | 27-05-2010 | EP | 2361430 | A2 | 31-08-2011 |
| | | | | US | 2010131273 | A1 | 27-05-2010 |
| | | | | US | 2013226582 | A1 | 29-08-2013 |
| | | | | US | 2015046162 | A1 | 12-02-2015 |
| | | | | WO | 2010061344 | A2 | 03-06-2010 |

EPO FORM P0459

For more details about this annex : see Official Journal of the European Patent Office, No. 12/82

**EP 3 537 320 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20140359739 A1
- US 4751737 A
- US 5710866 A